# EUROPÄISCHE PATENTSCHRIFT

(11) **EP 1 597 858 B1**
(45) Veröffentlichungstag und Bekanntmachung des Hinweises auf die Patenterteilung: **06.04.2011**
(21) Anmeldenummer: 03717131.1
(22) Anmeldetag: 25.02.2003
(51) Int. Cl.: H04L 12/14, H04W 80/04

(54) **VERFAHREN ZUR SPARIERUNG VON ZU SPEZIFISCHEN GRUPPEN ZUORDNENBAREN IP-PAKETEN UND DAS ENTSPRECHENDE NETZWERKELEMENT**
METHOD FOR SEPARATING IP PACKETS WHICH CAN BE ALLOCATED TO SPECIFIC GROUPS AND CORRESPONDING NETWORK ELEMENT
PROCEDE POUR SEPARER DES PAQUETS IP POUVANT ETRE AFFECTES A DES GROUPES SPECIFIQUES ET UN ELEMENT DE RESEAU CORRESPONDANT

(43) Veröffentlichungstag der Anmeldung: 23.11.2005
(73) Patentinhaber: Nokia Siemens Networks GmbH & Co. KG, 81541 München (DE)
(72) Erfinder: ANDERSEN, Franck-Uwe, 10625 Berlin (DE); FÖLL, Uwe, 14612 Falkensee (DE)
(86) Internationale Anmeldenummer: PCT/DE2003/000712
(87) Internationale Veröffentlichungsnummer: WO 2004/077739

(56) Entgegenhaltungen:
- WO-A-00/02349
- WO-A-00/76249
- WO-A-00/79494
- US-A- 6 049 873
- DEERING S ET AL: "iFC 2460: Internet Protocol, Version 6 (IPv6)" IETF, INTERNT ENGINEERING TASK FORCE, Dezember 1998 (1998-12), Seiten 1-39, XP002216844 Gefunden im Internet: <URL:http://www.faqs.org/ftp/rfc/pdf/rfc24 60.txt.pdf> [gefunden am 2002-10-15] in der Anmeldung erwähnt

## Beschreibung

Die vorliegende Erfindung betrifft ein Verfahren zur Separierung von zu spezifischen Gruppen zuordenbaren IP-Paketen und ein IP-Paket. In drahtlosen und drahtgebundenen Kommunikationsnetzen werden häufig Kommunikationsverfahren verwendet, welche auf der Übertragung von Datenpaketen (z.B. IP-Paketen, IP=Internet Protokoll) beruhen. Man spricht dabei dann von paketbasierten Mobilfunknetzen. Derartige IP-Pakete bestehen aus einem Header (Kopfteil) und einem an den Header anschließenden Datencontainer. Der Aufbau eines derartigen Headers ist beispielsweise in der Druckschrift "Network Working Group, Request for comments 2460, Internet Protocol, Version 6 (IPv6) Specification" von S. Deering und R. Hinden vom Dez. 1998, insbesondere in Kapitel 3 "IPv6 Header Format" beschrieben. Header und Datencontainer bilden das IP-Paket. In dem Header sind Daten gespeichert, welche für die Übertragung des IP-Paketes von einem IP-Paket-Sender zu einem IP-Paket-Empfänger notwendig sind.

In paketbasierten Mobilfunknetzen basiert eine Gebührenerfassung unter Anderem auf einer Erfassung der übertragenen IP-Pakete. Die Gebühren berechnen sich dabei aus dem Gesamtvolumen der von und zu einem Nutzer übertragenen IP-Pakete. In einem IP-Paketstrom, insbesondere im Falle der Anwendung der IPv6 Version, sind aber neben reinen Nutzdaten von Anwendungen auch interne Signalisierungsdaten, wie beispielsweise für eine (zustandslose) Konfiguration oder eine Segmentierung (MTU-discovery), enthalten. Die übertragenen Signalisierungs-IP-Pakete werden innerhalb eines Tunnels durch Netzelemente des Mobilfunknetzes übertragen. Dabei werden sie innerhalb desselben Tunnels übertragen wie die Nutz-IP-Pakete. Daher können die Signalisierungs-IP-Pakete nicht ohne Weiteres von den Nutz-IP-Paketen unterschieden bzw. separiert werden. Dadurch werden die entsprechenden Nutzer mit mengenmäßiger Gebührenerfassung, wie sie vorab beschrieben ist, für diese IP-Pakete belastet, obwohl diese keine eigentlichen Nutzdaten transportieren. Die Signalisierungs-IP-Pakete dienen vielmehr den Anforderungen und Notwendigkeiten des Netzbetreibers, und haben für den Teilnehmer keine Relevanz. Im Extremfall läuft auch keine Anwendungssoftware. Bei sogenannten "always-on"-Sitzungen beispielsweise werden IP-Pakete übertragen, die IPv6 Signalisierungsparameter wie Routeradressen, das heißt IP-Paket-Vermittlungen, enthalten. Auch wenn ein Nutzer keinerlei Dienste, wie beispielsweise Web-Zugriffe in Anspruch nimmt, werden diese IP-Pakete bei der Gebührenerfassung erfasst und dem Nutzer in Rechnung gestellt.

Ferner können mehrere Anwendungen einen IP-Paketstrom zum Übertragen ihrer Daten verwenden. Die gleichzeitige Nutzung eines IP-Paketstroms durch mehrere Anwendungen führt gerade bei der Übertragung von gebührenfreien Daten durch eine spezifische Anwendung zu dem Problem, wie die Daten zu unterscheiden bzw. zu separieren sind.

Darüber hinaus besteht die Möglichkeit, dass ein Operator in bestimmten Fällen einem Nutzer beliebige Dienstleistungen, das heißt nicht bestimmte einzelne Anwendungen, sondern komplette PDP-Kontexte für beliebige Datenübertragungen, gebührenfrei anbieten möchte. Auch hier stellt sich das Problem der Separierung der diesen PDP-Kontexten zugeordneten IP-Paketen von den anderen IP-Paketen.

WO 00/02349 offenbart einen Leser eines Netzwerkes, der Zahlungsbits von verschiedenen Zellen analysiert und basierend auf dieser Analyse einen Zähler inkrementiert oder nicht.

Deering S ET AL: "RFC2460: Internet Protocol, Version 6 (IPV6)" IETF, Internet Engineering Task Force, December 1998 (1998-12), Seiten 1 bis 39, XP 002216844; gefunden im Internet: URL: http://www.fags.org/ftp/rfc/pdf/rfc246 0.txt.pdf, gefunden am 15.10.2002, offenbart verschiedene Ausgestaltungen von Header als Ergänzung des Internetprotokolls.

Die WO 00/79494 A1 offenbart ein Verfahren zur elektronischen Zahlung von Daten, die über ein Computernetzwerk übertragen werden. Hierzu werden gewisse Zähler inkrementiert bzw. dekrementiert.

Eine Aufgabe der vorliegenden Erfindung war es somit, ein Verfahren, ein IP-Paket, ein Netzwerkelement und ein Mobilfunknetz bereit zu stellen, die in zuverlässiger und kostengünstiger Art ermöglichen, eine Separierung von zu spezifischen Gruppen zuordenbaren IP-Paketen zu realisieren.

Gelöst wird diese Aufgabe durch ein erfindungsgemäßes Verfahren nach Anspruch 1 und ein erfindungsgemäßes Netzelement gemäß Anspruch 15 sowie ein erfindungsgemäßes Mobilfunk netz gemäß Anspruch 16. Vorteilhafte Ausführungsformen werden in den entsprechenden Unteransprüchen aufgeführt.

Erfindungsgemäß wird ein Verfahren zur Separierung von zu spezifischen Gruppen zuordenbaren IP-Paketen in einem paketbasierten Mobilfunknetz bereit gestellt, bei dem in einem ersten autorisierten Netzelement des Mobilfunknetzes alle in dem Mobilfunknetz ankommende IP-Pakete hinsichtlich einer Zuordenbarkeit zu mindestens einer Gruppe geprüft und mindestens für einer spezifischen Gruppe zuordenbare IP-Pakete eine gruppenspezifische Markierung in einem Feld eines Headers mindestens eines, insbesondere eines jeden dieser IP-Pakete vorgenommen wird. Hierbei ist es insbesondere vorteilhaft, dass die Markierung in einem Feld des jeweiligen Headers vorgenommen wird, das zur Aufnahme von Übertragungsdaten vorgesehen ist.

Das erfindungsgemäße Verfahren kann so ausgestaltet sein, dass ein Feld des jeweiligen Headers verwendet wird, dessen Feldelemente unvollständig belegt sind mit zur Übertragung des IP-Paketes vorgesehenen Übertragungsdaten. Dadurch können vorteilhafterweise "ungenutzte" Feldelemente sinnvoll genutzt werden. Dies betrifft solche Feldelemente des jeweiligen Headers, die beim Übertragen nicht oder nicht vollständig für die Aufnahme von Übertragungsdaten benötigt werden, die aber dennoch, gegebenenfalls mit "Nullen" gefüllt, mitübertragen werden.

Für das erfindungsgemäße Verfahren wird vorzugsweise ein IP-Paket verwendet, welches nach Vorgaben des Internet Protocols Version 6 (IPv6) aufgebaut ist.

Vorteilhafterweise kann als Feld des jeweiligen Headers das "Flow Label"-Feld verwendet werden. Dieses Feld wird oftmals nicht zur Speicherung von Übertragungsdaten benötigt, so dass die Feldelemente dieses Feldes nicht belegt sind und Platz für eine Markierung bieten.

Ebenso kann vorteilhafterweise als Feld des jeweiligen Headers das "Interface-ID"-Feld eines Adressfeldes des jeweiligen Headers des IP-Paketes verwendet werden. Das "Interface-ID"-Feld eines Adressfeldes des Headers ist oftmals so groß dimensioniert, dass nicht alle Feldelemente (Bits bzw. Bytes) zur Aufnahme der Interface- ID-Informationen benötigt werden. Dadurch können erfindungsgemäß die ungenutzten Bits bzw. Bytes für eine Markierung verwendet werden.

Ferner kann vorteilhafterweise ein zusätzlicher IPv6-Header definiert werden, in welchen die Markierung aufgenommen wird. Man bezeichnet diesen zusätzlichen Header dann als "extension header". Es sind derzeit mehrere extension header in IPv6 definiert. Es ist im Rahmen der vorliegenden Erfindung auch möglich, einen existierenden extension header beispielsweise des Typs "hop-by-hop option header" zu nehmen und diesen inhaltlich zu gestalten, indem er mit einer vorangehenden Beschreibung des eigentlichen Inhalts versehen wird; im Bereich der Informatik spricht man dabei von TLV (type, length, value).

Das erfindungsgemäße Verfahren kann so ausgestaltet sein, dass die Markierung an einem ersten autorisierten Netzelement des Mobilfunknetzes in das Feld des jeweiligen Headers eingeschrieben bzw. vorgenommen wird, wobei das erste Netzelement zwischen einem senderseitigen IP-Stack und einem empfängerseitigen IP-Stack an einem Datenkanal angeordnet ist. Dadurch wird vorteilhafterweise für Einrichtungen, die Zugriff auf den Datenkanal haben, wie beispielsweise für Vermittlungsstellen eines Betreibers des Datenkanals oder für einen Applikationsrechner, möglich, über diesen Datenkanal transportierte IP-Pakete mit einer Markierung zu versehen.

In einer bevorzugten Ausführungsfom des erfindungsgemäßen Verfahrens wird die Markierung der IP-Pakete durch mindestens ein zweites autorisiertes Netzelement erkannt und die entsprechenden IP-Pakete werden einer spezifischen Behandlung unterzogen.

Vorzugsweise handelt es sich bei dem zweiten autorisierten Netzelement um eine Gebührenerfassungsstelle und die markierten IP-Pakete werden als gebührenfrei erkannt. Der Aufwand, nur in dem ersten autorisierten Netzelement die kostenrelevanten von den nicht-kostenrelevanten Paketen zu trennen bzw. zu separieren und zu markieren ist wesentlich geringer als die Unterscheidung bzw. Erkennung in allen Netzelementen durchzuführen, die in der Lage sind sogenannte Gebühren-Tickets zu erzeugen. Handelt es sich beispielsweise um Signalisierungs-Pakete, die nicht vergebührt werden sollen, so vereinfacht ein direktes IP-Paket basiertes Vergebühren durch Separierung von einmal als Signalisierungs-Pakete erkannter und somit markierter IP-Pakete die Vorgänge erheblich, da man bei beispielsweise n Netzelementen n-1 mal eine Klassifizierung und Separierung einspart. Die verbleibenden Netzelemente, die sogenannte Gebührendatensätze (charging ticket) erzeugen, müssen erfindungsgemäß lediglich auf das Vorhandensein einer Markierung achten und dann gegebenenfalls kein Gebührendaten (charging ticket) für dieses Paket erfassen. Will ein Anbieter eine Anwendung gebührenfrei anbieten, so werden erfindungsgemäß die IP-Pakete, die dieser Anwendung zuzuordnen sind, von einem entsprechenden Anwendungsrechner in dem ersten autorisierten Netzelement markiert. Diese Markierung wird dann durch die Gebührenerfassungsstellen ausgewertet und die markierten IP-Pakete werden als gebührenfrei erkannt. Auch hier ist der Aufwand, in nur einem Netzelement die kosten-relevanten von den nicht-kostenrelevanten IP-Paketen zu trennen bzw. zu separieren und zu markieren, wesentlich geringer als die Unterscheidung bzw. Separierung in allen Netzelementen durchzuführen, die Gebührendatensätze erzeugen. Zu diesem Zweck müssten diese Netzelemente über eine Datenbank mit gebührenfreien Anwendungen bzw. einer Datenbank mit den Ziel-und Ursprungsadressen der Anwendungen verfügen.

Ferner gibt es auch noch die Möglichkeit, dass ein Operator in bestimmten Fällen seinen Kunden Dienstleistungen gebührenfrei anbieten möchte. Dabei handelt es sich beispielsweise dann nicht um bestimmte einzelne Anwendungen auf bestimmten TCP-UDP-Ports innerhalb von existierenden PDP-Kontexten, sondern um komplette, gebührenfreie PDP-Kontexte für beliebige IP-Datenübertragungen. Erfindungsgemäß können nun alle diesem PDP-Kontext zuzuordnenden IP-Pakete durch einen Anwendungsserver markiert werden. Somit werden alle diesem PDP-Kontext zuzuordnenden IP-Pakete durch die Gebührenerfassungsstellen erkannt und nicht vergebührt.

In einer weiteren bevorzugten Ausführungsform des erfindungsgemäßen Verfahrens wird an von den IP-Paketen zu passierenden Grenzelementen des Mobilfunknetzes, zwischen welchen die autorisierten Netzelemente des Mobilfunknetzes liegen, eine Sicherheitsfunktion eingeführt, die die Markierung in allen markierten, in dem Mobilfunknetz ankommenden IP-Paketen löscht.

Dies hat den Vorteil, dass jegliche Sicherheitsrisiken an den Grenzen des Mobilfunknetzes wie auch an einem Endgerät umgangen werden können. Bei einer Übertragung von IP-Paketen kann es an der Netzgrenze des zu passierenden Mobilfunknetzes wie auch an dem Endgerät Ansatzpunkte für einen Missbrauch geben. Ein Angreifer könnte zu diesem Zweck alle IP-Pakete mit einer Markierung versehen, die die IP-Pakete als gebührenfrei kennzeichnet. Die Gebührenerfassungsstellen würden die IP-Pakete bei der Gebührenerfassung nicht berücksichtigen und der Angreifer könnte gebührenfrei Daten übertragen. Erfindungsgemäß wird dieser Gefahr nun vorgegriffen, indem an den von den zu übertragenden IP-Paketen passierenden Grenzelementen des Mobilfunknetzes oder an einem anderen Punkt vor den Gebührenerfassungsstellen eine Sicherheitsfunktion eingeführt wird, die die Markierung in allen markierten, in dem Mobilfunknetz ankommenden IP-Paketen löscht. Bei den Grenzelementen handelt es sich beispielsweise um einen RNC (Radio Network Controller) oder eine Übergangsrechner (Gateway) zum mobilen Paketnetz. Mit Hilfe dieser Sicherheitsfunktion wird eine nicht autorisierte Benutzung der Markierung verhindert. Die Grenzelemente des Mobilfunknetzes, in welche die Sicherheitsfunktion eingeführt wird, werden dabei so gewählt, dass alle Netzelemente jenseits dieser Grenzelemente keine Anwendung für eine Markierung haben, das heißt dass hier keine Gebührenerfassung und keine autorisierte Benutzung einer Markierung erfolgt. Folglich hat eine Markierung von IP-Paketen, die die Netzelemente jenseits der die Sicherheitsfunktion tragenden Grenzelemente passieren, keine Auswirkung auf die Gebührenerfassung. Die Gebührenerfassungsstellen des Mobilfunknetzes sowie die zur Einführung einer Markierung autorisierten Netzelemente befinden sich zwischen den die Sicherheitsfunktion tragenden Grenzelementen. Durch Einführung der Sicherheitsfunktion ist eine Markierung eines die Gebührenerfassungsstelle passierenden IP-Paketes autorisiert und nicht missbräuchlich entstanden.

In einer bevorzugten Ausführungsform des erfindungsgemäßen Verfahrens verwendet die Sicherheitsfunktion eine Bit-Maske. Die Benutzung einer Bit-Maske, wie beispielsweise eine Addition einer Null Bit-Maske zu einem Byte mit einem gesetzten Bit, ist ein sehr einfaches Verfahren, mit Hilfe dessen die zur Separierung dienende Markierung gelöscht werden kann. Die Sicherheitsfunktion ist eine einfache Funktion, welche keiner höheren Leistungsanforderungen bedarf und das Mobilfunknetz nicht belastet. Es sind keine Datenbanken und aufwendige Bewertungsverfahren notwendig. Die Sicherheitsfunktion kann problemlos in existierende Netzelemente des Mobilfunknetzes integriert werden und führt nur zu einer sehr geringen Belastung der Leistungsfähigkeit der Netzelemente.

In einer weiteren bevorzugten Ausführungsform des erfindungsgemäßen Verfahrens wird in einem empfangsseitigen Terminal eine Funktion zur Auswertung der Markierung der ankommenden IP-Pakete und eine der Auswertung entsprechende Anzeige vorgesehen.

Bei der Benutzung von Markierungen, beispielsweise zur Signalisierung einer gebührenfreien Übertragung in IP-Paketen ist es wünschenswert, einem Nutzer beispielsweise die Anzahl an gebührenfrei übertragenen IP-Paketen anzuzeigen. Ziel einer derartigen Anzeige kann es sein, dem Nutzer transparent zu machen, dass für die Übertragung der IP-Pakete, entsprechend der Nutzung eines bestimmten Dienstes keine Gebühren anfallen. Darüber hinaus soll dem Nutzer das gesamte Volumen der gebührenfrei empfangenen IP-Pakete angezeigt werden. Vorzugsweise legt die zur Auswertung vorgesehene Funktion in dem empfangseitigen Terminal eine Bit-maske über ein ankommendes IP-Paket, wodurch bewertbar ist, ob das IP-Paket maskiert, das heißt beispielsweise gebührenfrei, übertragen worden ist. Durch Aufsummieren auf eine Zähler kann das gesamte Volumen an gebührenfrei übertragenen IP-Paketen akkumuliert werden. Eine geeignete Anzeigefunktion kann auf diesem Zähler zugreifen.

Ferner betrifft die vorliegende Erfindung ein IP-Paket mit einem Header und einem Datencontainer, wobei das IP-Paket einer spezifischen Gruppe von IP-Paketen zuordenbar ist und eine gruppenspezifische Markierung in einem Feld des Headers eingetragen ist.

In einer bevorzugten Ausführungsform des erfindungsgemäßen IP-Paketes ist das Feld des Headers ein Feld, dessen Feldelemente unvollständig belegt sind mit zur Übertragung des IP-Paketes vorgesehenen Übertragungsdaten.

Ferner ist das erfindungsgemäße IP-Paket vorzugsweise nach IPv6-Vorgaben aufgebaut.

Vorzugsweise ist das IP-Paket dergestalt, dass die Markierung anzeigt, dass das IP-Paket gebührenfrei ist.

Weitere vorteilhafte Ausführungsformen der Erfindung werden anhand der folgenden Figuren näher erläutert. Es zeigen
Fig. 1 Schematische Darstellung einer IP-Infrastruktur zur Darlegung eines Ablaufs einer Ausführungsform des erfindungsgemäßen Verfahrens;
Fig. 2 Schematische Darstellung einer IP-Infrastruktur zur Darlegung eines weiteren Ablaufs einer anderen Ausführungsform des erfindungsgemäßen Verfahrens.

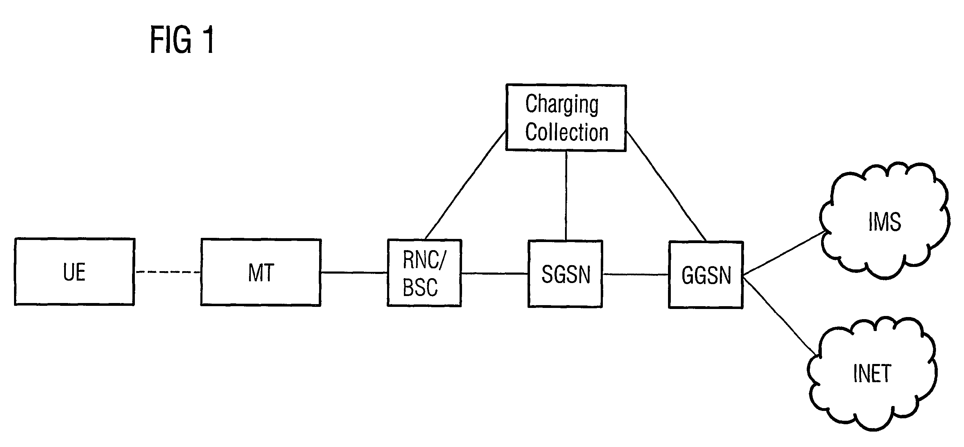

In Figur 1 ist schematisch ein Ausschnitt einer IP-Infrastruktur aufgezeigt. Dargestellt ist ein sogenanntes "U-ser Equipment" UE, welches an ein mobiles Terminal MT angeschlossen ist. Über dieses mobile Terminal MT erhält das User Equipment Zugang zu einem Mobilfunknetz MF. Von dem Mobilfunknetz MF sind nur die im Rahmen dieser Darstellung relevanten Netzelemente dargestellt. In diesem Ausführungsbeispiel ist ein Mobilfunknetz der dritten Generation dargestellt, welches nach GPRS-Vorgaben arbeitet (GPRS=General Packet Radio System). Dargestellt ist ein RNC (Radio Network Controller) bzw. ein BSC (Base Station Controller), welcher einen Zugangsknoten bildet. Vom RNC werden zu übertragende IP-Pakete zu einem SGSN (Servicing GPRS Support Node) geleitet. Der SGSN ist ein Steuernetzknoten, der die Mobilität eines mobilen Terminals kontrolliert. Ausgehend von dem SGSN werden die IP-Pakete dann zu einem GGSN (Gateway GPRS Support Node) geleitet. Der GGSN ist ein zentraler Übergangspunkt eines GPRS-Netzes, der im vorliegenden Fall eine Anbindung an ein Datenpaketsteuerungssystem IMS (IMS= IP Multimedia Subsystem) oder an ein Paketdatennetz, wie beispielsweise das Internet gewährleistet. Sollen nun beispielsweise IP-Pakete, die nach den Vorgaben von IPv6 aufgebaut sind und demnach einen Header und einen Datencontainer aufweisen, von dem Internet oder dem IMS zu dem User Equiment UE gesendet werden, wobei beispielsweise reine Signalisierungspakete gebührenfrei übertragen werden sollen, so müssen die IP-Pakete zunächst daraufhin überprüft werden, ob sie reine Signalisierungsdaten transportieren. Der GGSN überprüft nun alle von dem Internet oder dem IMS bei ihm ankommende IP-Pakete. Enthält ein IP-Paket nur Signalisierungsdaten, so nimmt der GGSN als erstes autorisiertes Netzelement des Mobilfunknetzes eine Markierung in einem Feld des Headers vor. Diese Markierung signalisiert nun allen nachkommenden, noch von dem IP-Paket zu passierenden Netzelementen, dass dieses IP-Paket gebührenfrei übertragen wird. Sowohl der SGSN wie auch der RNC können als Gebührenerfassungsstellen dienen und können demnach sogenannte Gebührendatensätze ausstellen. Ferner sind sie in der Lage, das heißt autorisiert, die Markierung auszuwerten und das IP-Paket als gebührenfrei zu erkennen. Die Markierung wird dabei vorteilhafterweise in einem Feld des Headers des IP-Paketes vorgenommen, dessen Feldelemente unvollständig mit zur Übertragung des jeweiligen IP-Paketes vorgesehenen Übertragungsdaten belegt sind. Dabei ist das IP-Paket nach IPv6-Vorgaben aufgebaut. Die Markierung kann nun beispielsweise in dem "Flow Label"-Feld eingefügt werden. Ferner ist es denkbar, die Markierung in dem "Interface ID"-Feld vorzunehmen. Letzteres ist oftmals so groß dimensioniert, dass nicht alle Feldelemente zur Aufnahme der Interface-ID-Informationen benötigt werden. Dadurch können erfindungsgemäß die ungenutzten Bits bzw. Bytes für die Einfügung der Markierung verwendet werden. Darüber hinaus ist es denkbar, einen zusätzlichen IPv6-Header, einen sogenannten "extension header" zu definieren und darin die Markierung vorzunehmen. Will man nun Signalisierungspakete markieren, so müssen diese zunächst als solche erkannt werden. Zu diesem Zweck lässt sich beispielsweise ein sogenanntes Pattern-Matching des Headers eines IP-Paketes mit Masken von bekannten Signalisierungspakettypen vornehmen. Das Erkennen eines IP-Paket als Signalisierungspaket ist hinfällig, wenn das jeweilige Paket gerade in diesem Netzelement erzeugt wurde, in welchem im Folgeschritt dann gleich auch die Markierung vorgenommen wird.

Eine weitere Anwendungsmöglichkeit des erfindungsgemäßen Verfahrens kann beispielsweise auch eine Art paketbasierter Notruf sein. Wenn ein Nutzer einen möglichen IMS-emergency-Applikationsserver mit einem IPv6-basierten Notruf über einen PDP-Kontext anspricht, markiert dieser Anwendungsserver die entsprechenden dem bestimmten PDP-Kontext zuzuordnenden IP-Pakete derart, dass sie von den Gebührenerfassungsstellen bei Auswertung der Markierung als gebührenfrei erkannt werden. Dadurch wird verhindert, dass ein Notruf wegen möglichem fehlendem Guthaben abgebrochen wird.

Eine weitere Anwendungsmöglichkeit des erfindungsgemäßen Verfahrens kann beispielsweise auch ein kostenloser Dienst zur Aktualisierung von Betriebssystemprogrammen (Firmware) eines Mobilfunktelefons sein. Wenn ein Nutzer zur Aktualisierung des Betriebssystems einen möglichen Anwendungsserver mit einer IPv6-basierten Aktualisierungsanforderung über einen PDP-Kontext anspricht, so nimmt der Anwendungsserver erfindungsgemäß in den jeweiligen Headern der entsprechenden dem betreffenden PDP-Kontext zuzuordnenden IP-Pakete eine Markierung derart vor, dass diese IP-Pakete von den Gebührenerfassungsstellen bei Auswertung der Markierung als gebührenfrei erkannt werden. Dadurch wird ermöglicht, dass ein Betreiber eines Mobilfunknetzes seinen Verpflichtungen zur Aktualisierung und Instandsetzung der durch ihn vertriebenen Endgeräte nachkommt, ohne dass von dem Nutzer Gebühren dafür erhoben werden.

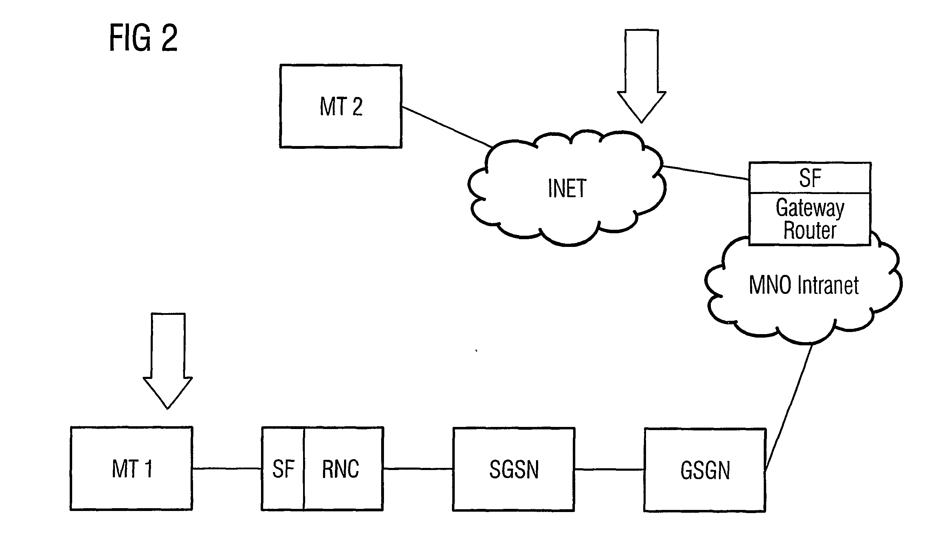

Figur 2 zeigt einen Ausschnitt aus einer IP-Infrastruktur. Darstellt sind zwei mobile Terminal MT1, MT2. Diese mobilen Terminals MT1 und MT2 sind über ein Mobilfunknetz und das Internet (INET) miteinander verbunden. Für das Mobilfunknetz sind nur einige relevante Netzelemente dargestellt. Über einen RNC erhält das mobile Terminal MT1 Zugang zu dem Mobilfunknetz. Ferner ist ein SGSN als Steuernetzknoten dargestellt und ein GGSN, der den Zugang zu einem hier darstellten MNO (Mobile Network Operator) Intranet gewährleistet. Über ein Gateway des Intranets wird ein Zugang zum Internet INET ermöglicht. Über das Internet schließlich wird eine Verbindung zu dem zweiten mobilen Terminal MT2 möglich. Zur Übertragung von IP-Paketen wird im vorliegenden Beispiel die IP Version 6, d.h. IPv6 verwendet. Bei Anwendung des erfindungsgemäßen Verfahrens sollen dabei alle Signalisierungspakete mit einer Markierung versehen werden, damit diese von den Gebührenerfassungsstellen ausgewertet und die entsprechenden IP-Pakete als gebührenfrei erkannt und entsprechend behandelt werden. An den Netzgrenzen wie auch an den mobilen Terminals können nun potentielle Ansatzpunkte für einen Missbrauch bestehen. Zu diesem Zweck könnte ein Angreifer alle IP-Pakete mit einer spezifischen Markierung versehen, die von den Gebührenerfassungsstellen ausgewertet wird und die entsprechenden IP-Pakete als gebührenfrei erkannt werden. Als Konsequenz würden die Gebührenerfassungsstellen als autorisierte Netzelemente diese IP-Pakete bei der Gebührenerfassung nicht berücksichtigen und der Angreifer könnte gebührenfrei Daten übertragen. An zwei relevanten Grenzelementen, zwischen welchen die autorisierten Netzelemente des Mobilfunknetzes liegen, wird nun eine Sicherheitsfunktion eingeführt, die die Markierung in allen markierten, in dem Mobilfunknetz ankommenden IP-Paketen löscht. Im vorliegenden Fall werden als relevante Grenzelemente der RNC und ein Gateway des MNO Intranets verwendet. In diesem Grenzelementen des Mobilfunknetzes wird eine Sicherheitsfunktion SF eingeführt. Diese Funktion SF hat die Aufgabe eine nicht autorisierte Benutzung der Markierung zu verhindern. Die beiden Grenzelemente RNC und Gateway sind derart gewählt, dass alle Netzelemente jenseits dieser Grenzelemente keine Autorisierung für die Benutzung der Markierung haben. Alle Netzelemente diesseits der Grenzelemente können die Markierung benutzen und werden auch durch die Einführung der Sicherheitsfunktion in den Grenzelementen nicht beeinträchtigt. Die Sicherheitsfunktion ihrerseits ist vorteilhafterweise ein einfaches Verfahren zum Löschen der Markierung in allen IP-Paketen, welche die Sicherheitsfunktion bzw. die entsprechenden Grenzelemente passieren. Zum Löschen kann beispielsweise eine einfache Bit-Maske verwendet werden. Da alle die Sicherheitsfunktion passierenden IP-Pakete maskiert werden, sind keine aufwendigen Bewertungsverfahren notwendig. Die Sicherheitsfunktion in dieser Form kann in jedes Gateway integriert werden. Ferner hat sie keine höheren Leistungsanforderungen und belastet das Mobilfunknetz nicht. Es sind keine Datenbanken notwendig.

## Patentansprüche

1. Verfahren zur Separierung von zu spezifischen Gruppen zuordenbaren IP-Paketen in einem paketbasierten Mobilfunknetz, bei dem
- in einem ersten autorisierten Netzelement (GGSN) des Mobilfunknetzes alle in dem Mobilfunknetz ankommende IP-Pakete hinsichtlich einer Zuordenbarkeit zu mindestens einer Gruppe geprüft und
- mindestens für einer spezifischen Gruppe zuordenbare IP-Pakete eine gruppenspezifische Markierung in einem Feld eines Headers mindestens eines, insbesondere eines jeden dieser IP-Pakete vorgenommen wird.

2. Verfahren nach Anspruch 1,
**dadurch gekennzeichnet,**
**dass** jeweils ein Feld der jeweiligen Header verwendet wird, dessen Feldelemente unvollständig belegt sind mit zur Übertragung des jeweiligen IP-Paketes vorgesehenen Daten.

3. Verfahren nach einem der Ansprüche 1 oder 2,
**dadurch gekennzeichnet,**
**dass** IP-Pakete verwendet werden, welche nach IPv6-Vorgaben aufgebaut sind.

4. Verfahren nach einem der vorhergehenden Ansprüche,
**dadurch gekennzeichnet,**
**dass** als Feld der jeweiligen Header das "Flow Label"-Feld verwendet wird.

5. Verfahren nach einem der Ansprüche 1 bis 3,
**dadurch gekennzeichnet,**
**dass** als Feld der jeweiligen Header das "Interface ID"-Feld verwendet wird.

6. Verfahren nach einem der Ansprüche 1 bis 3,
**dadurch gekennzeichnet,**
**dass** als Feld der jeweiligen Header das "extension header"-Feld verwendet wird.

7. Verfahren nach einem der vorhergehenden Ansprüche,
**dadurch gekennzeichnet,**
**dass** das erste autorisierte Netzelement (GGSN) zwischen einem senderseitigen IP-Stack und einem empfängerseitigen IP-Stack an einem Datenkanal angeordnet ist.

8. Verfahren nach einem der vorhergehenden Ansprüche,
**dadurch gekennzeichnet,**
**dass** als spezifische Gruppe alle IP-Pakete verstanden werden, die ein und dem selbem PDP-Kontext zuordenbar sind.

9. Verfahren nach einem der vorhergehenden Ansprüche,
**dadurch gekennzeichnet,**
**dass** die Markierung der IP-Pakete durch ein zweites autorisiertes Netzelement (SGSN, RNC) erkannt wird und die entsprechenden IP-Pakete einer spezifischen Behandlung unterzogen werden.

10. Verfahren nach einem der vorhergehenden Ansprüche,
**dadurch gekennzeichnet,**
**dass** nur bei einem, das erste autorisierte Netzelement (GGSN) als erstes passierende IP-Paket eine Markierung derart vorgenommen wird, dass alle anderen, derselben Gruppe zuordenbare IP-Pakete durch das zweite autorisierte Netz-element (SGSN,RNC) als zu derselben Gruppe zuordenbar erkennbar sind.

11. Verfahren nach einem der Ansprüche 9 oder 10,
**dadurch gekennzeichnet,**
**dass** das zweite autorisierte Netzelement (SGSN,RNC) eine Gebührenerfassungsstelle ist und die markierten IP-Pakete als gebührenfrei erkannt werden.

12. Verfahren nach einem der Ansprüche 9 bis 11,
**dadurch gekennzeichnet,**
**dass** an von den IP-Paketen zu passierenden Grenzelementen des Mobilfunknetzes, zwischen welchen die autorisierten Netzelemente des Mobilfunknetzes liegen, eine Sicherheitsfunktion eingeführt wird, die die Markierung in allen markierten, in dem Mobilfunknetz ankommenden IP-Paketen löscht.

13. Verfahren nach Anspruch 12,
**dadurch gekennzeichnet,**
**dass** die Sicherheitsfunktion eine Bit-Maske verwendet.

14. Verfahren nach einem der vorhergehenden Ansprüche,
**dadurch gekennzeichnet,**
**dass** in einem empfangsseitigen Terminal eine Funktion zur Auswertung der Markierung der ankommenden IP-Pakete und eine der Auswertung entsprechende Anzeige vorgesehen wird.

15. Netzwerkelement (GGSN) eines Mobilfunknetzes,
wobei das Netzelement zur Anbindung des Mobilfunknetzes an ein Datenpaketsteuerungssystem (IMS) oder Paketnetzwerk ausgestaltet ist;
wobei das Netzelement ausgestaltet ist als erstes autorisiertes Netzelement des Mobilfunknetzes ankommende IP-Pakete hinsichtlich einer Zuordenbarkeit zu zumindest einer Gruppe zu prüfen; und ferner ausgestaltet ist, mindestens für einer spezifischen Gruppe zuordenbare IP-Pakete eine gruppenspezifische Markierung in einem Feld eines Headers mindestens eines, insbesondere eines jeden dieser IP-Pakete vorzunehmen.

16. Mobilfunknetz mit einem Netzelement (GGSN) nach Anspruch 15.

## Claims

1. Method for separating IP packets which can be associated with specific groups in a packet-based mobile radio network, in which
- a first authorized network element (GGSN) in the mobile radio network checks all IP packets arriving in the mobile radio network for associatability with at least one group, and
- at least IP packets which can be associated with a specific group have group-specific marking carried out for them in the field of a header in at least one, particularly in each, of these IP packets.

2. Method according to Claim 1,
**characterized**
**in that** a respective field of the respective headers is used whose field elements are taken up incompletely by data provided for transmitting the respective IP packet.

3. Method according to either of Claims 1 and 2,
**characterized**
**in that** IP packets are used which are designed on the basis of IPv6 stipulations.

4. Method according to one of the preceding claims,
**characterized**
**in that** the field used in the respective headers is the "Flow Label" field.

5. Method according to one of Claims 1 to 3,
**characterized**
**in that** the field used in the respective headers is the "Interface ID" field.

6. Method according to one of Claims 1 to 3,
**characterized**
**in that** the field used in the respective headers is the "extension header" field.

7. Method according to one of the preceding claims,
**characterized**
**in that** the first authorized network element (GGSN) is arranged between a transmitter-end IP stack and a receiver-end IP stack on a data channel.

8. Method according to one of the preceding claims,
**characterized**
**in that** the specific group is understood to mean all IP packets which can be associated with one and the same PDP context.

9. Method according to one of the preceding claims,
**characterized**
**in that** the marking of the IP packets is recognized by a second authorized network element (SGSN, RNC), and the appropriate IP packets are subjected to specific treatment.

10. Method according to one of the preceding claims,
**characterized**
**in that** only when an IP packet passes through the first authorized network element (GGSN) first is marking carried out such that all other IP packets which can be associated with the same group can be recognized by the second authorized network element (SGSN, RNC) as being able to be associated with the same group.

11. Method according to either of Claims 9 and 10,
**characterized**
**in that** the second authorized network element (SGSN, RNC) is a charge detection point and the marked IP packets are recognized as free of charge.

12. Method according to one of Claims 9 to 11,
**characterized**
**in that** a security function which erases the marking in all marked IP packets arriving in the mobile radio network is introduced at boundary elements in the mobile radio network which are to be passed through by the IP packets and between which the authorized network elements of the mobile radio network are situated.

13. Method according to Claim 12,
**characterized**
**in that** the security function uses a bit mask.

14. Method according to one of the preceding claims,
**characterized**
**in that** a function for evaluating the marking of the arriving IP packets and an indicator corresponding to the evaluation are provided in a reception-end terminal.

15. Network element (GGSN) in a mobile radio network,
wherein the network element is designed to connect the mobile radio network to a data packet control system (IMS) or packet network;
wherein the network element is designed to check, as a first authorized network element in the mobile radio network, whether incoming IP packets can be associated with at least one group; and is also designed to perform group-specific marking, at least for IP packets which can be associated with a specific group, in a field of a header of at least one, particularly each, of these IP packets.

16. Mobile radio network having a network element (GGSN) according to Claim 5.

## Revendications

1. Procédé pour séparer des paquets IP pouvant être affectés à des groupes spécifiques dans un réseau radio mobile basé sur des paquets, dans lequel :
- tous les paquets IP entrant dans le réseau radio mobile sont vérifiés, dans un premier élément de réseau autorisé (GGSN) du réseau radio mobile, quant à leur aptitude à être affectés à au moins un groupe et
- un marquage spécifique au groupe est effectué, au moins pour des paquets IP pouvant être affectés à un groupe spécifique, dans un champ d'un en-tête d'au moins l'un et plus particulièrement de chacun de ces paquets IP.

2. Procédé selon la revendication 1, **caractérisé en ce qu'**est utilisé à chaque fois un champ des en-têtes respectifs dont les éléments de champ ne sont pas entièrement occupés par des données prévues pour la transmission du paquet IP respectif.

3. Procédé selon l'une des revendications 1 ou 2, **caractérisé en ce que** sont utilisés des paquets IP dont l'architecture est conforme à des spécifications IPv6.

4. Procédé selon l'une des revendications précédentes, **caractérisé en ce qu'**est utilisé, en tant que champ des en-têtes respectifs, le champ « Flow Label ».

5. Procédé selon l'une des revendications 1 à 3, **caractérisé en ce qu'**est utilisé, en tant que champ des en-têtes respectifs, le champ « Interface ID ».

6. Procédé selon l'une des revendications 1 à 3, **caractérisé en ce qu'**est utilisé, en tant que champ des en-têtes respectifs, le champ « extension header ».

7. Procédé selon l'une des revendications précédentes, **caractérisé en ce que** le premier élément de réseau autorisé (GGSN) est situé au niveau d'un canal de données entre une pile IP côté émetteur et une pile IP côté récepteur.

8. Procédé selon l'une des revendications précédentes, **caractérisé en ce que** sont compris en tant que groupe spécifique tous les paquets IP qui peuvent être affectés à un seul et même contexte PDP.

9. Procédé selon l'une des revendications précédentes, **caractérisé en ce que** le marquage des paquets IP est reconnu par un deuxième élément de réseau autorisé (SGSN, RNC) et les paquets IP correspondants sont soumis à un traitement spécifique.

10. Procédé selon l'une des revendications précédentes, **caractérisé en ce que**, uniquement pour un paquet IP qui passe le premier par le premier élément de réseau autorisé (GGSN), un marquage est effectué de manière telle que tous les autres paquets IP pouvant être affectés au même groupe peuvent être reconnus par le deuxième élément de réseau autorisé (SGSN, RNC) comme pouvant être affectés au même groupe.

11. Procédé selon l'une des revendications 9 ou 10, **caractérisé en ce que** le deuxième élément de réseau autorisé (SGSN, RNC) est un centre de recensement des frais et les paquets IP marqués sont reconnus comme exempts de frais.

12. Procédé selon l'une des revendications 9 à 11, **caractérisé en ce qu'**est introduite, au niveau d'éléments limites du réseau radio mobile par lesquels doivent passer les paquets IP et entre lesquels se trouvent les éléments de réseau autorisés du réseau radio mobile, une fonction de sécurité qui supprime le marquage dans tous les paquets IP marqués qui entrent dans le réseau radio mobile.

13. Procédé selon la revendication 12, **caractérisé en ce que** la fonction de sécurité utilise un masque de bits.

14. Procédé selon l'une des revendications précédentes, **caractérisé en ce que** sont prévus, dans un terminal côté réception, une fonction d'évaluation du marquage des paquets IP entrants et un affichage correspondant à l'évaluation.

15. Élément de réseau (GGSN) d'un réseau radio mobile, l'élément de réseau étant réalisé pour rattacher le réseau radio mobile à un système de commande de paquets de données (IMS) ou un réseau de paquets, l'élément de réseau étant réalisé pour, en tant que premier élément de réseau autorisé du réseau radio mobile, contrôler des paquets IP entrants quant à leur aptitude à être affectés à au moins un groupe, et étant en outre réalisé pour effectuer, au moins pour des paquets IP pouvant être affectés à un groupe spécifique, un marquage spécifique au groupe dans un champ d'un en-tête d'au moins un, et plus particulièrement de chacun de ces paquets IP.

16. Réseau radio mobile comprenant un élément de réseau (GGSN) selon la revendication 15.
